# EUROPÄISCHE PATENTSCHRIFT

(11) **EP 2 474 253 B1**
(45) Veröffentlichungstag und Bekanntmachung des Hinweises auf die Patenterteilung: **01.05.2013**
(21) Anmeldenummer: 11008637.8
(22) Anmeldetag: 28.10.2011
(51) Int. Cl.: A47J 31/36

(54) **Brühgruppe für eine Kaffeemaschine**
Brewing element for a coffee machine
Groupe d' infusion pour une machine à café

(30) Priorität: 07.01.2011 DE 102011008095
(43) Veröffentlichungstag der Anmeldung: 11.07.2012
(73) Patentinhaber: Severin Elektrogeräte GmbH, 59846 Sundern (DE)
(72) Erfinder: Kroesen, Klaus, 46509 Xanten (DE)
(74) Vertreter: Köchling, Conrad-Joachim

(56) Entgegenhaltungen:
- DE-B3-102007 042 379
- US-A- 4 230 033
- US-A1- 2007 175 338

## Beschreibung

Die Erfindung betrifft eine Brühgruppe für eine Kaffeemaschine, insbesondere zur Zubereitung von Espresso, mit einer Brühkammer zur Aufnahme von Kaffeemehl sowie mit einem Kolben mit Kolbenstange zur Verdichtung des Kaffeemehls, welches sich in der Brühkammer befindet, sowie Anschlüssen für Heißwasserzulauf und Filtratablauf, wobei der Kolben mittels eines Stellantriebes axial in der zylindrischen Brühkammer verstellbar ist, wobei die unverdrehbar mit dem Kolben verbundene Kolbenstange durch eine Öffnung an einer Verschlussplatte der Brühkammer geführt ist.

Brühgruppen dieser Art sind im Stand der Technik bekannt. Üblicherweise wird bei den bekannten Brühgruppen das Kaffeemehl nach dem Einfüllen durch den Kolben mittels einer einfachen axialen Vorschubbewegung komprimiert. Diese Kompression des Kaffeemehls ist zum Erreichen des richtigen Brühdruckes wichtig. Allerdings kommt es abhängig von der Befüllung und der Befüllrichtung, die im Wesentlichen seitlich erfolgt, bei dieser Vorgehensweise zu einer ungleichmäßigen Verdichtung des in der zylindrischen Kammer befindlichen Kaffeemehls, da sich das Kaffeemehl beim Befüllen ungleichmäßig im Brühraum ablagert.

DE 10 2007 042 379 B3 zeigt eine derartige Brühgruppe.

Ausgehend von diesem Stand der Technik liegt der Erfindung die Aufgabe zugrunde, mit einfachen Mitteln und ohne gesonderten Antrieb eine gleichmäßige Verteilung und damit eine gleichmäßige Verdichtung des Mahlgutes zu erreichen.

Zur Lösung dieser Aufgabe schlägt die Erfindung vor, dass der Mantel der Kolbenstange mindestens eine gewendelte Nut aufweist und am Durchgriff der Kolbenstange durch die Verschlussplatte mindestens ein Zapfen ausgebildet oder angeordnet ist, der in die Nut eingreift, so dass der axialen durch den Stellantrieb bewirkten Schiebebewegung des Kolbens eine Drehbewegung des Kolbens überlagert ist.

Durch diese Ausbildung ist bei nahezu unverändertem Aufbau der gesamten Brühgruppe eine gewünschte gleichmäßige Verteilung und Verdichtung des Mahlgutes erreicht, weil bei der axialen Verschiebung des Kolbens dieser sich zwangsläufig um seine Längsachse dreht, wodurch das in der Brühkammer befindliche Kaffeemehl gleichmäßig verteilt und auch gleichmäßig verdichtet wird. Die gleichmäßige Verteilung des Kaffeemehls führt dazu, dass das Kaffeemehl gleichmäßig verpresst wird, wenn der Kolben axial vorgeschoben wird, wobei im Ergebnis hierdurch beim Brühvorgang eine gleichmäßige Durchströmung des Mahlgutes erreicht wird und somit eine optimale Extraktion der Geschmacksstoffe bewirkt wird.

Die erfindungsgemäße Ausgestaltung ist sehr einfach zu realisieren, indem lediglich die Kolbenstange mit einer entsprechend gewendelten Nut ausgebildet wird und im Durchgriffsbereich der Kolbenstange durch die Verschlussplatte oder dergleichen ein zusätzlicher Zapfen ausgebildet oder angeordnet wird, der in die Nut eingreift. Hierdurch wird bei der axialen Verschiebung des Kolbens zwangsläufig eine Drehbewegung des Kolbens erreicht.

Um eine gleichmäßige Belastung der Kolbenstange zu erreichen, so dass diese sich nicht biegen oder schräg ausrichten kann, ist vorgesehen, dass jeweils eine Nut auf einander gegenüberliegenden Seiten im Mantel der Kolbenstange ausgebildet ist und an der Verschlussplatte gegenüberliegend jeweils ein Zapfen vorgesehen ist.

Bevorzugt ist zudem vorgesehen, dass die Nut derart ausgestaltet ist und verläuft, dass der Kolben bei der betriebsbedingten axialen Verschiebung eine Vierteldrehung bis eine halbe Drehung vollführt.

Ein schematisches Ausführungsbeispiel der Erfindung ist in der Zeichnung dargestellt und im Folgenden näher beschrieben.

Es zeigt:

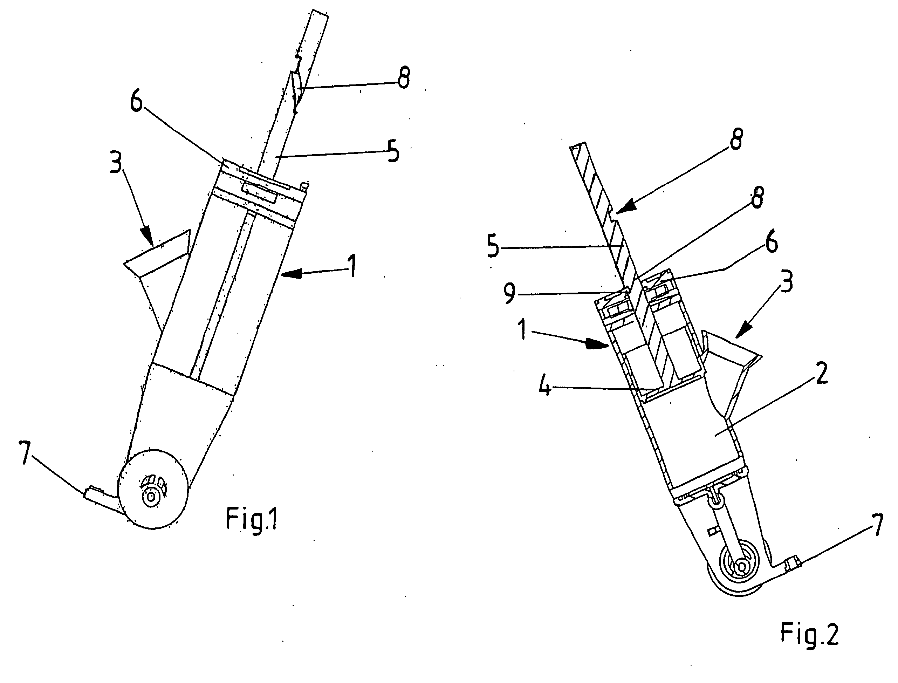

- Figur 1: die wesentlichen Bestandteile einer Brühgruppe in Seitenansicht;
- Figur 2: desgleichen im Mittellängsschnitt gesehen.

In der Zeichnung ist eine Brühgruppe 1 gezeigt, die für eine Kaffeemaschine vorgesehen ist und vorzugsweise zu Zubereitung von Espresso dient.

Die Brühgruppe 1 weist eine Brühkammer 2 auf, die zur Aufnahme von Kaffeemehl dient. Dafür ist seitlich an die Brühkammer 2 eine Befüllöffnung 3 angeschlossen, die zum Zuführen von Kaffeemehl dient. In der Brühkammer 2 ist ein Kolben 4 axial verschieblich zur Brühkammer 2 angeordnet, der eine drehfest an ihm befestigte Kolbenstange 5 abragt, die eine Verschlussplatte 6 an einer Öffnung durchgreift.

Die Kolbenstange 5 ist mit einem elektrischen Antrieb gekoppelt, der in der Zeichnung nicht dargestellt ist. Mittels dieses Antriebes ist die Kolbenstange 5 in der Zeichnung nach unten verstellbar, um das in der Brühkammer 2 befindliche Kaffeemehl zu verdichten. In der Verdichtungsposition kann durch geeignete Anschlüsse Heißwasser in die Brühkammer 2 eingeführt und nach unten über einen Ablauf 7 kann das Filtrat abgeführt werden. Mittels des Stellantriebes kann dann die Kolbenstange entgegengesetzt bewegt werden, so dass der Kolben 4 eine Position einnimmt, wie sie in der Zeichnungsfigur 2 gezeigt ist.

Da sich bei der gezeigten Anordnung das Kaffeemehl, welches über die Einfüllöffnung 3 eingeführt wird, in der Brühkammer 2 schräg ausrichtet, so dass sich der Füllstand beziehungsweise die Begrenzung des Füllstandes nicht parallel zur Kolbenfläche des Kolbens 4 ausrichtet, ist die Kolbenstange 5 einer gewendelten Nut 8 in ihrem Mantel ausgestattet. Am Durchgriff der Kolbenstange 5 durch die Verschlussplatte 6 ist ein Zapfen 9 ausgebildet, der in die Nut 8 eingreift. Hierdurch wird erreicht, dass bei einer axialen durch den Stellantrieb bewirkten Bewegung der Kolbenstange 5 und damit des Kolbens 4 der Kolbenstange 5 samt Kolben 4 eine Drehbewegung aufgezwungen wird. Durch diese Drehbewegung wird das in der Brühkammer befindliche noch trockene Kaffeemehl so ausgerichtet und zusammengepresst, dass es gleichmäßig in der Brühkammer verteilt ist und die obere Schicht des Kaffeemehls parallel zur Kolbenfläche des Kolbens 4 ausgerichtet ist. Infolgedessen wird eine gleichmäßige Verdichtung des Mahlgutes erreicht, wenn der Kolben 4 in die Arbeitslage nach unten verstellt wird.

Gegebenenfalls kann auch vorgesehen sein, dass zwei Nuten auf gegenüberliegenden Seiten im Mantel der Kolbenstange 5 ausgebildet sind und entsprechend zwei Zapfen 9 an der Verschlussplatte 6 gegenüberliegend angeordnet sind, so dass die Kolbenstange 5 beidseitig geführt ist.

Vorzugsweise ist die Nut 8 oder sind die Nuten 8 so ausgestaltet und verlaufen derart, dass der Kolben 4 bei der betriebsbedingten axialen Verschiebung aus der Ausgangslage bis in die Endlage eine Vierteldrehung bis eine halbe Drehung vollführt.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Brühgruppe (1) für eine Kaffeemaschine, insbesondere zur Zubereitung von Espresso, mit einer Brühkammer (2) zur Aufnahme von Kaffeemehl sowie mit einem Kolben (4) mit Kolbenstange (5) zur Verdichtung des Kaffeemehls, welches sich in der Brühkammer (2) befindet, sowie Anschlüssen für Heißwasserzulauf und Filtratablauf (7), wobei der Kolben (4) mittels eines Stellantriebes axial in der zylindrischen Brühkammer (2) verstellbar ist, wobei die unverdrehbar mit dem Kolben (4) verbundene Kolbenstange (5) durch eine Öffnung an einer Verschlussplatte (6) der Brühkammer (2) geführt ist,
**dadurch gekennzeichnet, dass** der Mantel der Kolbenstange (5) mindestens eine gewendelte Nut (8) aufweist und am Durchgriff der Kolbenstange (5) durch die Verschlussplatte (6) mindestens ein Zapfen (9) ausgebildet oder angeordnet ist, der in die Nut (8) eingreift, so dass der axialen durch den Stellantrieb bewirkten Schiebebewegung des Kolbens (4) eine Drehbewegung des Kolbens (4) überlagert ist.

2. Brühgruppe nach Anspruch 1,
**dadurch gekennzeichnet, dass** jeweils eine Nut (8) auf einander gegenüberliegenden Seiten im Mantel der Kolbenstange (5) ausgebildet ist und an der Verschlussplatte (6) gegenüberliegend jeweils ein Zapfen (9) vorgesehen ist.

3. Brühgruppe nach Anspruch 1 oder 2,
**dadurch gekennzeichnet, dass** die Nut (8) derart ausgestaltet ist und verläuft, dass der Kolben (4) bei der betriebsbedingten axialen Verschiebung eine Vierteldrehung bis eine halbe Drehung vollführt.

## Claims

1. A brewing unit (1) for a coffee machine, in particular for preparing espresso, having a brewing chamber (2) for accommodating coffee grounds and a piston (4) provided with a piston rod (5) for compression of the coffee grounds being in the brewing chamber (2), and ports for hot water supply and filtrate outlet (7), the piston (4) being axially adjustable in the cylindrical brewing chamber (2) by means of an actuator, the piston rod (5) non-rotatably linked to the piston (4) being guided through an opening at a closing plate (6) of the brewing chamber (2), **characterized by** that the casing of the piston rod (5) has at least one coiled groove (8), and at least one stud (9) is formed or arranged at the passage of the piston rod (5) through the closing plate (6), said stud engaging in the groove (8), so that a rotational movement of the piston (4) is superimposed on the axial sliding movement of the piston (4) caused by the actuator.

2. The brewing unit according to claim 1, **characterized by** that one groove (8) each is formed on opposite sides in the casing of the piston rod (5), and one stud (9) each is provided at the closing plate (6) opposite to each other.

3. The brewing unit according to claim 1 or 2, **characterized by** that the groove (8) is configured and extends such that the piston (4) carries out one quarter to one half turn during the operational axial sliding movement.

## Revendications

1. Groupe d'infusion (1) pour une machine à café, en particulier pour la préparation de café express, ayant une chambre d'infusion (2) pour la réception de moulures de café et un piston (4) pourvu d'une tige de piston (5) pour la compression des moulures de café se trouvant dans la chambre d'infusion (2), et des raccords pour l'alimentation d'eau chaude et la sortie de filtrat (7), le piston (4) étant axialement réglable dans la chambre d'infusion (2) cylindrique au moyen d'un actionneur, la tige de piston (5) liée de manière non rotative au piston (4) étant guidée à travers une ouverture à une plaque de fermeture (6) de la chambre d'infusion (2), **caractérisé en ce que** l'enveloppe de la tige de piston (5) comprend au moins une rainure (8) hélicoïdale, et au moins un tenon (9) est formé ou disposé au passage de la tige de piston (5) à travers la plaque de fermeture (6), ce tenon s'engrenant dans la rainure (8) de tel façon qu'un mouvement rotatif du piston (4) soit superposé sur le mouvement glissant axial du piston (4) provoqué par l'actionneur.

2. Groupe d'infusion selon la revendication 1, **caractérisé en ce qu'**une rainure (8) chacune est formée aux côtés opposés dans l'enveloppe de la tige de piston (5), et qu'un tenon (9) chacun est prévu en vis-à-vis à la plaque de fermeture (6).

3. Groupe d'infusion selon la revendication 1 ou 2, **caractérisé en ce que** la rainure (8) est configurée et s'étend de tel façon que le piston (4) effectue un quart de tour à un demi-tour pendant le mouvement glissant axial opérationnel.
